# EUROPEAN PATENT SPECIFICATION

(11) **EP 1 186 240 B1**
(45) Date of publication and mention of the grant of the patent: **17.08.2005**
(21) Application number: 00119347.3
(22) Date of filing: 07.09.2000
(51) Int. Cl.: A23G 9/28

(54) **Frozen dessert dispenser**
Abgabeeinheit für gefrorene Süssspeisen
Distributeur de dessert glacé

(43) Date of publication of application: 13.03.2002
(73) Proprietor: Hoshizaki Denki Co., Ltd., Toyoake-shi, Aichi 470-1168 (JP)
(72) Inventor: Horie, Takeshi, Shimane (JP); Hara, Yasuo, Shimane (JP); Ito, Yoshinobu, Shimane (JP); Matsudaira, Hideki, Shimane (JP)
(74) Representative: Müller-Boré & Partner Patentanwälte

(56) References cited:
- EP-A- 1 068 803
- WO-A-99/49739
- GB-A- 2 230 057
- US-A- 5 620 115
- US-A- 5 884 502

## Description

This invention relates to a frozen dessert dispenser for dispensing a frozen dessert such as ice cream or frozen yogurt.

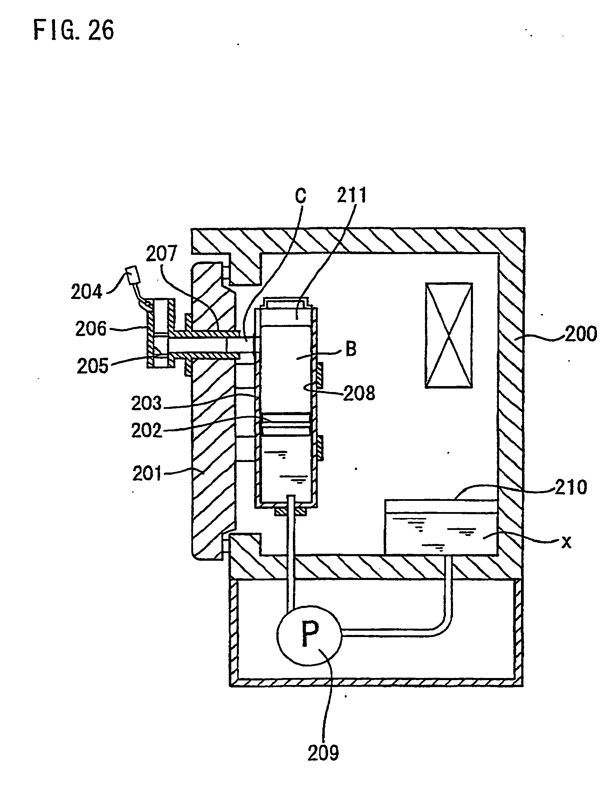

FIG. 26 shows a conventional ice cream dispenser comprising a freezer 200 having a door 201. A dispensing cylinder 203 is provided on a backside or inside of the door 201 in a vertical disposition in the freezer 200. A piston 202 is fitted in the dispensing cylinder 203 so as to be slid therein. A dispensing section 206 is mounted on the outside of the door 201. The dispensing section 206 includes a dispensing passage 205 opened and closed by a cock 204. A connecting pipe 207 communicating with the dispensing passage 205 extends inward through the door 201 to be connected to a discharge outlet C of an ice cream pack B accommodated in a pack-accommodating chamber 208 defined over the piston 202 in the dispensing cylinder 203. When the dispensing passage 205 is opened and a pump 209 is driven so that an operating fluid x is supplied into the interior of the dispensing cylinder 203 below the piston 202, the piston is moved upward so that the pack B is compressed, whereby ice cream is dispensed.

The pack B is replaced by a new one when the ice cream therein has been used up. In this case, the pump 209 is driven in reverse so that the operating fluid x is returned to a tank 210, whereupon the piston 202 is moved downward. With the downward movement of the piston 202, the door 201 is opened so that the dispensing cylinder 203 is taken out of the freezer 200. A lid 211 provided for closing the accommodating chamber 208 is detached from the cylinder 203 and the pack B is then replaced by a new one. In the above-described construction, however, since the dispensing cylinder 203 is fixedly provided on the inside of the door 201, the replacement of the pack B including detachment and attachment of the lid 211 is not easy.

In view of the aforesaid problem, the prior art has proposed an ice cream dispenser in which the dispensing cylinder is supported at its lower end so as to be inclinable. A latching member is provided on an upper end of the dispensing cylinder. The dispensing cylinder is held in a standing state when the latching member is engaged with a locking member mounted on the inside of the freezer door. In the proposed construction, the upper end of the dispensing cylinder can be located away from the freezer door, so that the pack B can easily be replaced. However, when the dispensing cylinder is inclined, the latching member needs to be disengaged from the locking member while the cylinder is held. Thus, an operator needs to use both of his or her hands for the inclining work. Since the inclining work is troublesome, a further improvement has been desired.

Furthermore, some amount of ice cream remains in the connecting pipe 207 when the pack B is replaced by a new one. When the freezer door is opened, the connecting pipe 207 is exposed to outside air such that the temperature thereof is increased. As a result, the ice cream remaining in the connecting pipe is melted to flow out of its inside end. When the ice cream flown out of the connecting pipe adheres to the door 201 to be left, it is unsanitary.

US-A-5 620 115 discloses a frozen confection dispenser including a collapsible container for the confection such as ice cream and a piston for selectively collapsing the container to extrude the confection from the container through an outlet to a cone or the like.

WO 99/49739 A discloses a device for producing soft ice creams in which even materials such as a strawberry easily changed in properties and containing an acid component can be used. The soft ice cream is obtained by charging the cream flow of a cooled and semi-hardened soft ice cream mix discharged from a discharge nozzle into a cup so that the discharge shape is maintained as much as possible.

Therefore, an object of the present invention is to provide a frozen dessert dispenser in which the dispensing cylinder can easily be inclined.

The present invention provides a frozen dessert dispenser wherein a dispensing cylinder in which a piston is fitted so as to be slid is provided on an inside of a door of a cold storage, wherein a pack of a frozen dessert is accommodated in an interior of the dispensing cylinder over the piston, wherein a dispensing section including a valve is provided on an outside of the door, and wherein a connecting pipe extending from the dispensing section through the door is connected to a discharge outlet of the pack, characterized by an operating arm pivotally mounted on an upper end of the dispensing cylinder and a support arm connected to both the operating arm and the door so that a link mechanism is constituted, and in that the dispensing cylinder is supported so as to be inclined so that an upper end thereof is departed from the door and that the operating arm is caused to pivot so that the dispensing cylinder is inclined between a standing position and an inclined position.

According to the above-described construction, when the operating arm is caused to pivot, the dispensing cylinder is inclined between the standing position and the inclined position with rotation of the support arm. Since the link mechanism is provided, the dispensing cylinder can easily be inclined with one hand.

In a preferred form, the operating arm includes an abutting portion abutting the dispensing cylinder when the dispensing cylinder is inclined to assume the inclined position, thereby preventing further inclination of the dispensing cylinder. When reaching the inclined position, the dispensing cylinder is received by the abutting portion of the operating arm to be supported.

In another preferred form, damping means is interposed between the door and the dispensing cylinder. The dispensing cylinder can be inclined slowly by the damping means . In further another preferred form, a stopper is provided on the inside of the door so as to engage the operating arm when the dispensing cylinder assumes the standing position, thereby preventing return of the operating arm. The dispensing cylinder can reliably be held at the standing position.

In further another preferred form, limiting means is provided on the dispensing cylinder so as to abut the operating arm when the dispensing cylinder assumes the standing position, thereby preventing further pivot of the operating arm. Consequently, the dispensing cylinder can be prevented from being excessively raised beyond the standing position.

In further another preferred form, the operating arm is adapted to strike against an edge of an opening closed and opened by the door. When the door is closed while the dispensing cylinder is at the inclined position, the operating arm strikes against the edge of the opening closed and opened by the door. As a result, the door cannot be closed. The dispensing cylinder can be prevented from remaining inclined.

In further another preferred form, the dispensing cylinder is placed on a mounting member to be supported thereon, the mounting member being rockably mounted via a hinge on the inside of the door, and that the mounting member is provided with positioning means for positioning the dispensing cylinder at a normal mounting position. The dispensing cylinder is normally positioned on the mounting member by the positioning means to be mounted thereon. Consequently, the pack can reliably be connected to the connecting pipe when the dispensing cylinder is raised into the standing position. Further, the mounting member preferably includes a fitting frame into which a lower end of the dispensing cylinder is fitted, the fitting frame having a side edge formed with a recess into which a part of an outer circumference of the dispensing cylinder is fitted, the recess constituting the positioning means.

In further another preferred form, the dispensing cylinder has an upper open end to which a lid is attached so as to be detachable while being rotated, whereupon an accommodation chamber for accommodating the pack is defined between the piston and the lid. In this construction, the lid and the inside of the door are provided with two detecting members responsive in an opposite relation respectively when the dispensing cylinder assumes the standing position and the lid is normally closed. Further, the detecting member at the lid side is provided with preventing means striking against the inside of the door to thereby prevent the dispensing cylinder from assuming the standing position when the lid is not normally closed.

Depending upon the responsiveness of the detecting members, they sometimes detect a normal closed position even when it differs to some extent from the true one. In the aforesaid construction, however, when the lid is not at the normal closed position and the dispensing cylinder is caused to stand, the preventing means provided on the detecting member at the lid side strikes against the inside of the door, whereupon the dispensing cylinder cannot be moved to the standing position. Consequently, the detection by the detecting members can be rendered reliable.

In further another preferred embodiment a receiving member is detachably mounted on the inside of the door to be located below the connecting pipe for receiving the ice cream falling from the connecting pipe.

Therefore, it is an advantage of this preferred embodiment, that frozen dessert dropping from the rear end of the connecting pipe can be disposed of.

According to the above-described construction, melted frozen dessert fallen from the connecting pipe at the side of the inside of the door is received by the receiving member to be reserved therein. The receiving member is occasionally detached to be cleaned. The interior of the storage can be prevented from being soiled, and the cleaning can readily be carried out.

The dispensing cylinder is preferably mounted at a lower end side thereof on a hinge further mounted on the inside of the door so that an upper end side of the dispensing cylinder is inclined. It is difficult to clean the hinge and accordingly, the hinge is unsanitary. In the aforesaid construction, however, the hinge can be prevented from being soiled by the frozen dessert.

The receiving member preferably includes a container having an upper open end and detachably mounted on the inside of the door and a receiving plate inserted into the container, the receiving plate having such a weight balance that the receiving plate is inserted into the container while being usually inclined so that an upper end side thereof is spaced away from the inside of the door. In this construction, the receiving plate is pushed by the dispensing cylinder to be raised when the dispensing cylinder assumes the standing position, and the receiving plate is inclined with inclination of the dispensing cylinder.

Even in a case where the space between the back of the door and the dispensing cylinder is narrow, the receiving plate is inclined so as to project from the container when the inner end of the connecting pipe is opened such that the frozen dessert tends to fall from the end. Consequently, the receiving plate can receive the frozen dessert fallen in a wide area.

An auxiliary receiving plate is preferably provided on the inside of the door to be located below the receiving member for receiving the frozen dessert falling along the inside of the door and guiding the received frozen dessert toward opposite sides of the hinge. When the frozen dessert starts to drop while the receiving member is detached for cleaning, the auxiliary receiving plate receives the frozen dessert to cause it to flow toward opposite sides of the hinge. Consequently, the frozen dessert can be prevented at least from adhering to the hinge.

The invention will be described, merely by way of example, with reference to the accompanying drawings, in which:
FIG. 1 is a longitudinal side section of an ice cream dispenser of a first embodiment in accordance with the present invention;
FIG. 2 is a perspective view of the inside of a heat-insulated door;
FIG. 3 is a plan view of a mounting plate;
FIG. 4 is a side view of a dispensing cylinder assuming the standing position, showing a link mechanism;
FIG. 5 is a side view of the dispensing cylinder which is being inclined;
FIG. 6 is a side view of the dispensing cylinder assuming the inclined position;
FIG. 7 is a sectional plan view of the ice cream dispenser, showing the state where the heat-insulated door cannot be opened;
FIG. 8 is a plan view of the dispensing cylinder which cannot be raised up when door detecting means is provided;
FIG. 9 is a plan view of the dispensing cylinder assuming the standing position;
FIG. 10 is a side view of the dispensing cylinder assuming the standing position in the ice cream dispenser of a second embodiment, showing the link mechanism;
FIG. 11 is a side view of the dispensing cylinder which is being inclined;
FIG. 12 is a side view of the dispensing cylinder assuming the inclined position;
FIG. 13 is a side view of the dispensing cylinder assuming the standing position in the ice cream dispenser of a third embodiment, showing the link mechanism;
FIG. 14 is a plan view of the dispensing cylinder assuming the standing position;
FIG. 15 is a longitudinal side section of the ice cream dispenser of a fourth embodiment;
FIG. 16 is an enlarged sectional view of the junction of the dispensing cylinder and the connecting pipe;
FIG. 17 is an enlarged sectional view of the dispensing cylinder in the inclined state;
FIG. 18 is an exploded perspective view of a receiving member;
FIG. 19 is a sectional view of the receiving member in the natural state;
FIG. 20 is a partial perspective view of the mounting structure of a container of the receiving member;
FIG. 21 is a perspective view of the inside of the heat-insulated door of the ice cream dispenser of a fifth embodiment;
FIG. 22 is a partial front view of the inside of the heat-insulated door;
FIG. 23 is a perspective view of the receiving member of the ice cream dispenser of a sixth embodiment;
FIG. 24 is a perspective view of the supporting structure for the container of the receiving member of the ice cream dispenser of a seventh embodiment;
FIG. 25 is a front view of an auxiliary receiving plate of the ice cream dispenser of an eighth embodiment; and
FIG. 26 is a sectional view of a conventional ice cream dispenser.

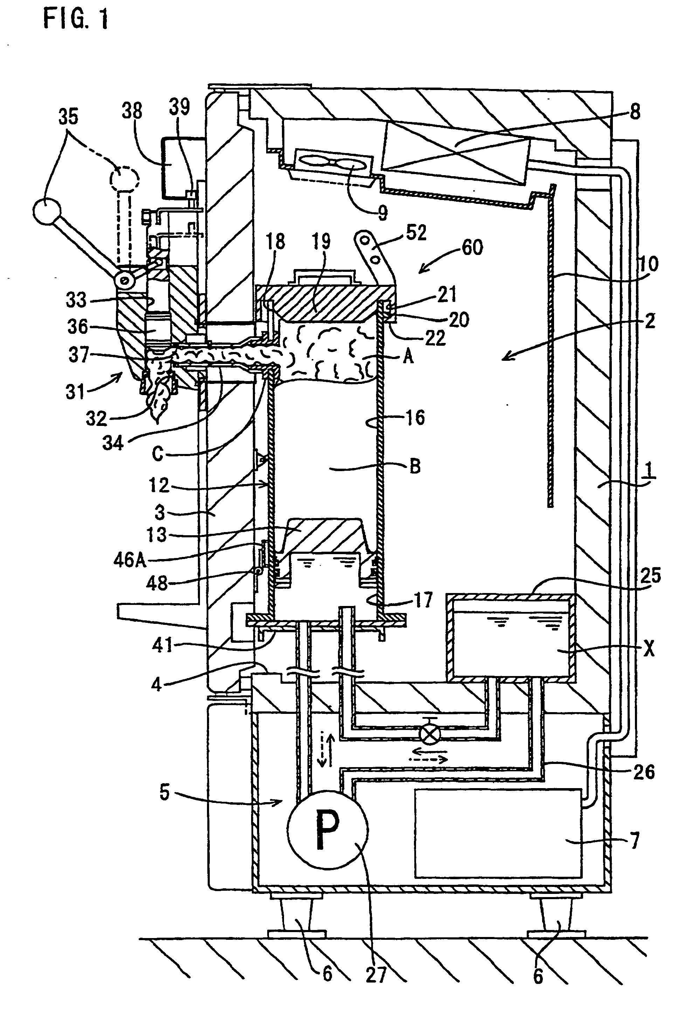

Several embodiments will be described with reference to the accompanying drawings. The present invention is applied to an ice cream dispenser in each embodiment. A first embodiment of the invention will now be described with reference to FIGS. 1 to 6. Referring to FIG. 1, the overall ice cream dispenser is shown. The ice cream dispenser includes a freezer 1 comprising a heat-insulated housing and serving as a cold storage. A freezing compartment 2 is defined in the freezer 1. The freezer 1 has a front opening 4 closed and opened by a heat-insulated door 3. A machine compartment 5 is defined at the bottom side of the freezer 1. Four legs 6 are mounted on respective corners of the underside of the freezer 1 so as to support the freezer. A refrigerator 7 is provided in the machine compartment 5. An evaporator 8 and a fan 9 are provided on the ceiling of the freezing compartment 2. The evaporator 8 is connected to the refrigerator 7. A duct 10 is provided on a rear wall of the freezing compartment 2. Air in the freezing compartment 2 is absorbed through the duct 10. When the air passes through the evaporator 8, heat exchange takes place so that cold air is produced. The cold air is then circulated by the fan 9 through the freezing compartment 2. As a result, a temperature in the freezing compartment 2 is maintained at such a value that ice cream can be reserved while being able to be dispensed.

A dispensing cylinder 12 is mounted on a backside or inside of the heat-insulated door 3 in a vertical disposition. A lower portion of the dispensing cylinder 12 is movable so that the cylinder is inclined. A link mechanism 60 is provided for inclining the dispensing cylinder 12 as will be described in detail later. A piston 13 is fitted in the dispensing cylinder 12 so as to be slid therein. Brine X (antifreezer) is employed as an operating fluid for operating the piston 13. The interior of the dispensing cylinder 12 over the piston 13 is defined as a pack-accommodating chamber 16, whereas the interior of the cylinder 12 below the piston 13 is defined as a pressure chamber 17. The brine X is supplied into and discharged from the pressure chamber 17. A wall of the pack-accommodating chamber 16 opposed to the heat-insulated door 3 has a generally U-shaped groove 18 formed by cutting vertically from the upper edge thereof. A flexible pack B containing ice cream A has a cylindrical discharge outlet C. The pack B is accommodated in the chamber 16 with the discharge outlet C being fitted in the groove 18.

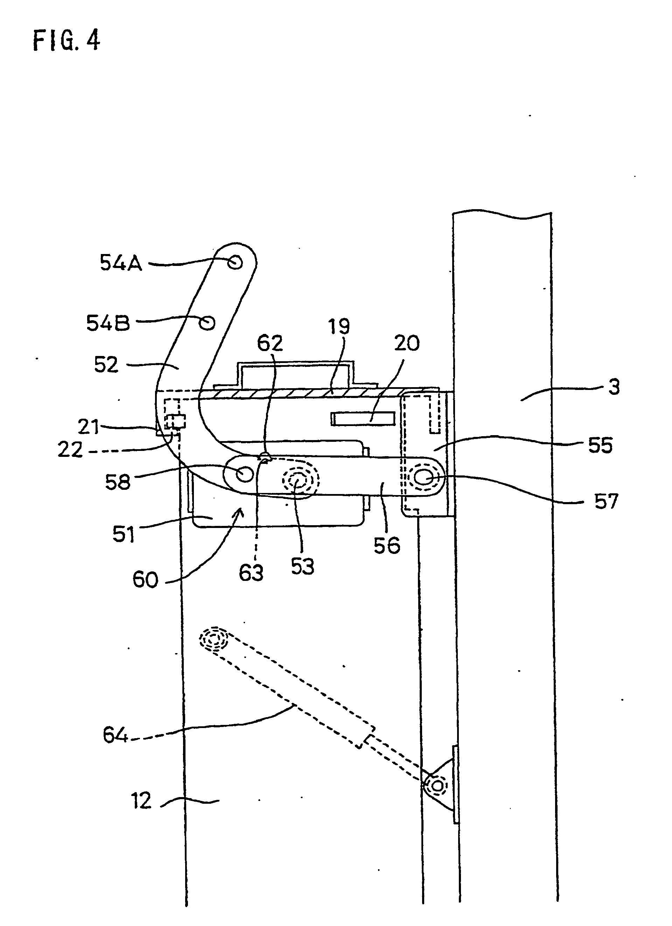

The dispensing cylinder 12 or the pack-accommodating chamber 16 has an upper open end to which a lid 19 is detachably attached. More specifically, a plurality of locking protrusions 20 are spaced on the upper end circumference of the dispensing cylinder 12 as shown in FIG. 4. The lid 19 has a cylindrical portion 21 formed along the outer circumference thereof so as to be open downward. The cylindrical portion 21 includes an inwardly directed locking collar 22 formed on a lower end thereof so as to correspond to protrusions 20. The lid 19 is placed on the upper end of the cylinder 12 with the collar 22 being disengaged from the protrusions 20. The lid 19 is then turned until striking against a stopper (not shown), whereupon the collar 22 is moved below the protrusions 20. As a result, the lid 19 is attached to the cylinder 12 so as to be prevented from falling off.

A tank 25 is provided on the rear bottom of the freezing compartment 2 for reserving the brine X. A brine passage 26 connects the tank 25 to the bottom of the cylinder 12. A reversible pump 27 is provided in the middle of the brine passage 26 and disposed in the machine compartment 5. When the pump 27 is normally driven, the brine X in the tank 25 is supplied into the pressure chamber 17 of the cylinder 12 as shown by solid arrows in FIG. 1. On the other hand, when the pump 27 is driven in the reverse direction, the brine X is sucked from the pressure chamber 17 into the tank 25 as shown by broken line arrows in FIG. 1.

A dispensing section 31 is provided on an upper outer wall of the heat-insulated door 3. The dispensing section 31 includes a vertical dispensing passage 33 having a dispensing port 32 formed in a lower end thereof and a connecting pipe 34 communicating with the dispensing passage 33. The connecting pipe 34 extends through the heat-insulated door 3 to the side of the freezing compartment 2 such that an inner end thereof is connected to the discharge outlet C of the pack B. A valve element 36 is fitted in the dispensing passage 33 so as to be moved upward and downward upon operation of a cock 35 so that a communication port 37 between the dispensing passage 33 and connecting pipe 34 is opened and closed. An operation panel 38 is mounted on the heat-insulated door 3 so as to be located over the dispensing section 31. The operation panel 38 includes a dispensing switch 39 turned on and off in response to an opening operation (solid line) and a closing operation (broken line) of the cock 35 respectively.

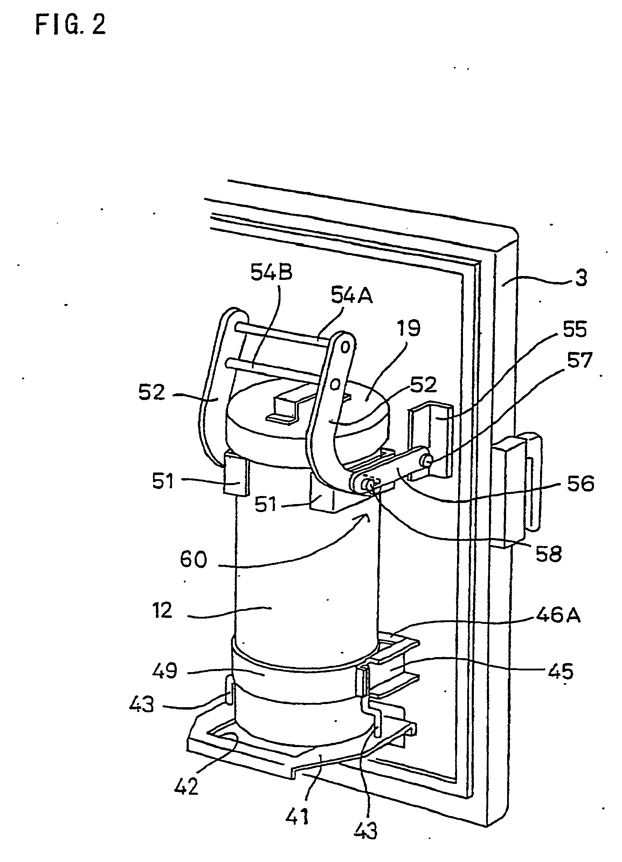

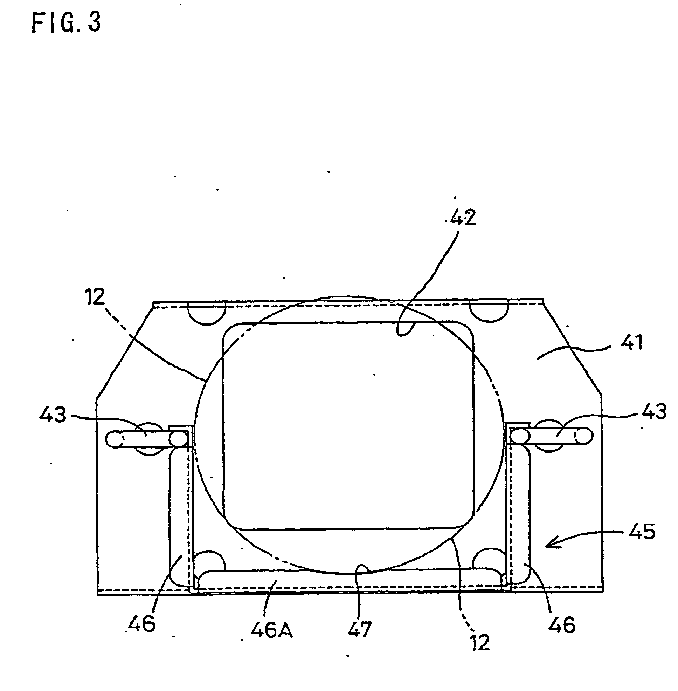

The structure of supporting mechanism for the dispensing cylinder 12 will now be described in detail. The lower end of the dispensing cylinder 12 is placed on the mounting plate 41 to be supported. The mounting plate 41 has a central opening 42 through which the brine passage 26 extends as shown in FIGS. 2 and 3. A pair of vertical bars 43 stand on right-hand and left-hand sides of the mounting plate 41 respectively. Each bar 43 has an inwardly bent stepped upper end. A generally C-shaped fitting member 45 is mounted between the upper ends of the bars 43. The fitting member 45 is fitted with substantially one half circumference of the lower end of the cylinder 12 at the door 3 side. The fitting member 45 comprises three channel bars 46 and 46A. The channel bar 46A opposed to the heat-insulated door 3 has an opening directed to the interior of the freezing compartment 2 or upward in FIG. 3. Upper and lower plates of the channel bar 46A have lengthwise central open edges with arcuate recesses 47 conforming to the contour of a part of the outer circumference of the cylinder 12, respectively. The channel 46A is pivotally mounted on a hinge 48 further mounted on the inside of the heat-insulated door 3.

The dispensing cylinder 12 is placed on the mounting plate 41 with its side having the U-shaped groove 18 being directed toward the heat-insulated door 3, fitted in the recesses 47 of the channel 46A. A metal belt 49 wound on the cylinder 12 is attached to the fitting member 45 so that the dispensing cylinder is fixed. Part of the outer circumferential face of the lower end of the cylinder 12 is fitted in the recesses 47 such that the cylinder 12 is positioned. Consequently, the distance between the cylinder 12 and the inside of the heat-insulated door 3 can accurately be determined, and the cylinder can be prevented from shaking right and left. Further, since the fitting member 45 includes the channel 46A, a high supporting strength can be obtained.

A mechanism for inclining the cylinder 12 will now be described with reference to FIGS. 4 to 6. Two mounting plates 51 are welded to right-hand and left-hand sides of the upper end of the cylinder 12 respectively. A pair of generally L-shaped operating arms 52 have proximal ends rotatably supported by movable shafts 53 respectively. Both operating arms 52 are integrated by two connecting bars 54A and 54B connecting them at the distal ends and positions away from the distal ends by a predetermined distance respectively as shown in FIG. 2.

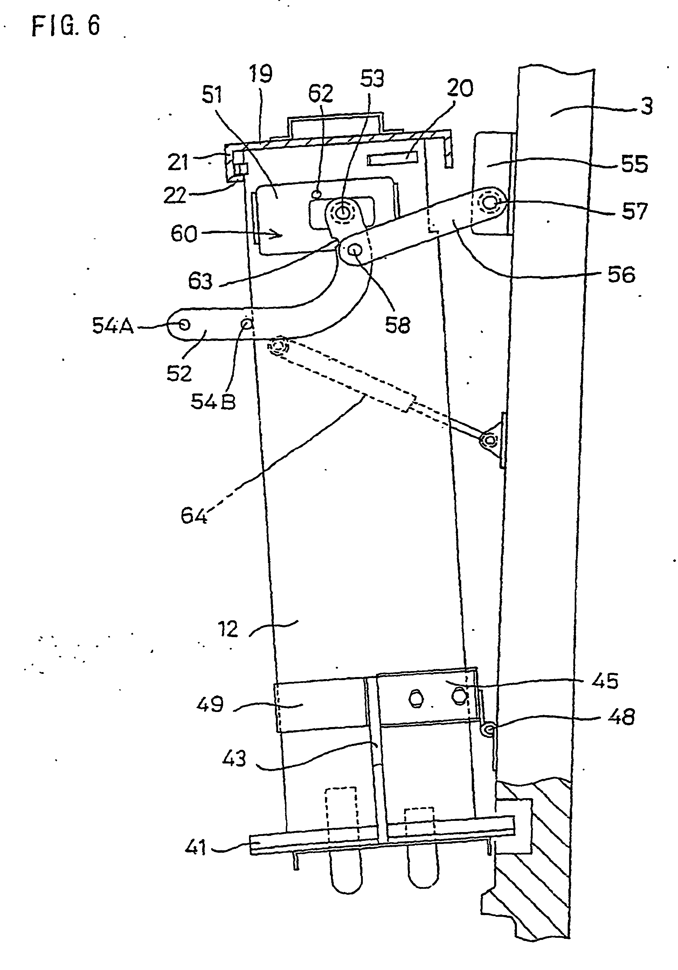

A pair of generally L-shaped brackets 55 are mounted on the inside of the heat-insulated door 3. Two straight support arms 55 have proximal ends rotatably supported on the brackets 55 by the support shafts 57 respectively. Each support shaft 57 assumes the same height as the movable shaft 53 when the cylinder 12 assumes a straight standing position. The distal ends of both support arms 56 are connected by the connecting shafts 58 to portions of the operating arms 52 slightly away from the proximal ends to the distal ends respectively. The foregoing constitutes the link mechanism 60 for inclining the cylinder 12. The dispensing cylinder 12 is inclined about the hinge 48 between a standing position as shown in FIG. 4 and an inclined position as shown in FIG. 6.

When the dispensing cylinder 12 is in the inclined position, the distal ends of the support arms 56 are slightly downwardly inclined, and the distal ends of the operating arms 52 project substantially horizontally toward the inside of the door 3. In this case, a portion of the upper circumferential wall face of the cylinder 12 at the freezing compartment 2 side is adapted to abut the inner connecting bar 54B extending between both operating arms 52. On the other hand, when the dispensing cylinder 12 is in the standing position, the support arms 56 are slightly upwardly inclined, and the distal ends of the operating arms 52 stand over the lid 19 and are adapted not to project toward the inside of the door 3. Further, two pins 62 serving as limiting means extend horizontally from the mounting plates so as to be located in the rear of the movable shafts 53 respectively. The operating arms 52 have generally semicircular notches 63 formed in the upper faces of the proximal ends respectively. When the dispensing cylinder 12 assumes the standing position, the pins 62 are fitted into the notches 63 respectively. A damper stay 64 is provided between the dispensing cylinder 12 and the inside of the heat-insulated door 3.

The operation of the ice cream dispenser will now be described. The dispensing cylinder 12 is supported on the inside of the heat-insulated door 3 so as to assume the standing position during operation as shown in FIGS. 1 and 4. In this state, the outlet C of the pack B is fitted in the inner end of the connecting pipe 34 communicating with the dispensing section 31 as shown in FIG. 1. When the ice cream A is to be dispensed, a vessel or container (neither shown) held by hand is put below the dispensing port 32. When the cock 35 is then opened, the communicating port 37 is opened. The dispensing switch 39 is turned on so that the pump 27 is normally driven to supply the brine X from the tank 25 into the pressure chamber 17 of the dispensing cylinder 12. As a result, the piston 13 is moved upward to compress the pack B so that the ice cream A is caused to flow out of the outlet C of the pack B. The ice cream A is further dispensed through the connecting pipe 34, the lower end of the dispensing passage 33 and the dispensing port 32 into the vessel. When a suitable amount of ice cream A is dispensed, the cock 35 is closed so that the dispensing switch 39 is turned off to stop the pump 27. Further, the communicating port 37 and the dispensing port 32 are closed. The above-described sequence is repeated so that the ice cream A is dispensed.

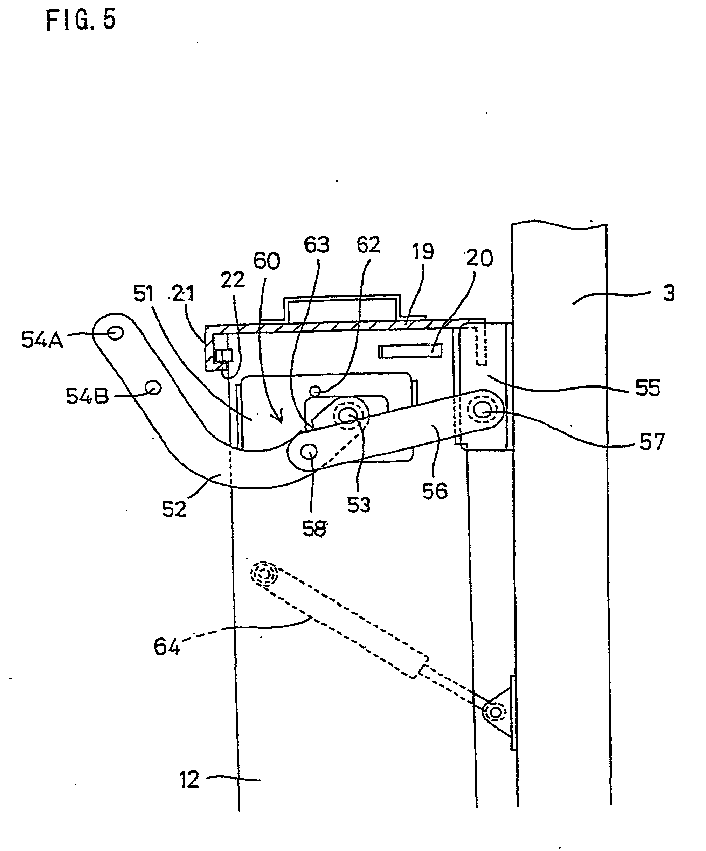

The pack B is replaced by a new one when the ice cream A in the pack has been used up. In this case, when a pack replacing switch (not shown) provided on the operation panel 38 is turned on, the pump 27 is driven in reverse so that the brine X is sucked from the dispensing cylinder 12 to be returned into the tank 25. Consequently, since the pressure in the pressure chamber 17 is rendered negative, the piston 13 is moved downward such that the pack-accommodating chamber 16 is spread. The pump 27 is stopped when the piston 13 assumes a lower end position. When the door 3 is then opened, the dispensing cylinder 12 is taken out of the freezing compartment 2 with the pivotal movement of the cylinder. When the distal end of the operating arm 52 is held by one hand in the condition as shown in FIG. 4 so that the operating arms are turned counterclockwise, the dispensing cylinder 12 is gradually inclined with the support arms 56 being turned counterclockwise as shown in FIG. 5, whereupon the outlet C of the pack B is pulled out of the connecting pipe 34. Thereafter, the weight of the dispensing cylinder 12 further causes the cylinder to incline toward the inclined position. The dispensing cylinder 12 is slowly inclined by the operation of the damper stay 64. When inclined by a predetermined angle, the cylinder 12 abuts the inner connecting bar 54B to thereby be held at the inclined position.

The lid 19 is then detached from the cylinder 12 and the used pack B is taken out. A new pack B of ice cream A is put into the pack accommodating chamber 16 and the lid 19 is re-attached to the cylinder 12. The distal end of the operating arm 52 is then held by the hand in the condition as shown in FIG. 6 so that the operating arms are turned clockwise. As a result, the cylinder 12 is caused to stand with the support arms 56 being turned clockwise. When the cylinder 12 is raised up to the state as shown in FIG. 5, the outlet C of the pack B faces the inner end of the connecting pipe 34. When the operating arms 52 are turned by a slightly larger force, the outlet C of the pack B is force fitted into the connecting pipe 34. When the cylinder 12 is raised to assume the standing position as shown in FIG. 4, the pins 62 are fitted into the respective notches 63. The operating arms 52 are thus prevented from being turned excessively. The cylinder 12 is held at the standing position with the outlet C of the pack B being fitted in the connecting pipe 34, as shown in FIG. 1. Subsequently, when the heat-insulated door 3 is closed, the cylinder 12 is accommodated in the freezing compartment 2 and accordingly, the ice cream A can be re-dispensed in the above-described manner.

According to the foregoing embodiment, the dispensing cylinder 12 is supported on the inside of the heat-insulated door 3 with the link mechanism 60 being provided therebetween. Consequently, when the cylinder 12 is inclined or when the pack B of ice cream A is replaced by a new one, for example, the operating arm 52 is held by one hand so that the cylinder 12 can easily be inclined. Further, the cylinder 12 is received by the connecting bar 54B extending between the operating arms 52 to reliably be supported at the inclined position. Further, when the cylinder 12 is inclined to assume the standing position, the operating arms 52 strike against the respective pins 62, whereby the cylinder 12 is prevented from further turning. Consequently, the cylinder 12 can be prevented from being inclined excessively over the standing position.

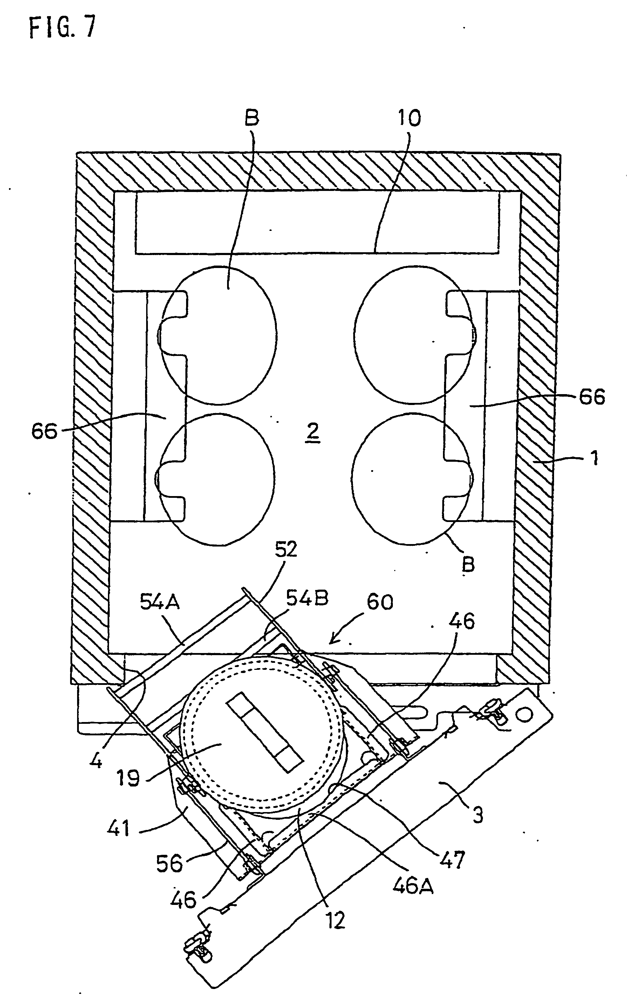

The prior art has provided an ice cream dispenser of the type in which an inner space of the freezing compartment 2 is utilized to accommodate a spare pack B hang on a support plate 66 as shown in FIG. 7. In this construction, when the heat-insulated door 3 is closed with the cylinder 12 being inclined after replacement of the pack B, there is a possibility that the cylinder 12 may strike against the spare pack B to break it. In the foregoing embodiment, however, the distal ends of the operating arms 52 project horizontally toward the inside of the door 3. Accordingly, when the door 3 is closed while the cylinder 12 is left at the inclined position, the connecting arm 54A located at the side of the distal end of the projecting operating arm 52 strikes against the open edge of the opening 4 of the freezer 2, whereupon the door 3 cannot be closed. Consequently, the spare pack B can be prevented from being damaged by the cylinder 12.

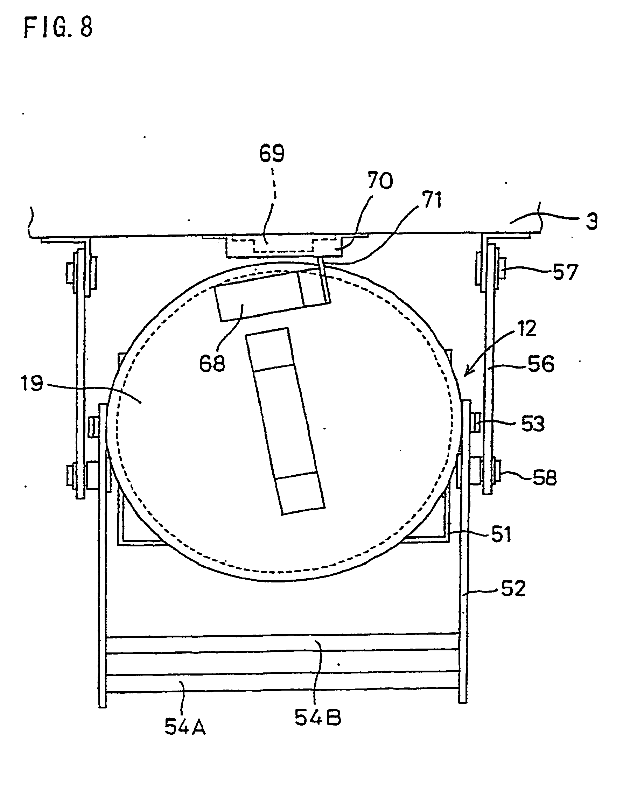

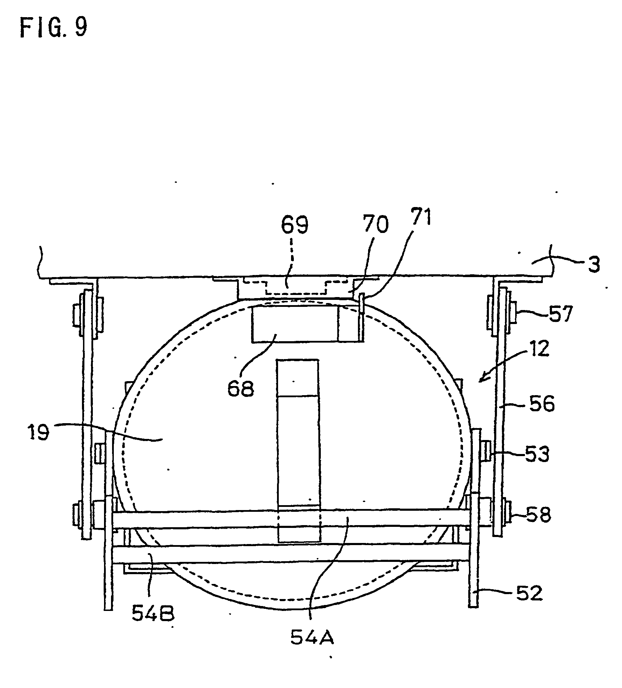

The lid 19 of the pack-accommodating chamber 16 is fitted with the cylinder 12 from above it and then turned for attachment. Since the underside of the lid 19 is subjected to a high pressure during dispensing, there is a possibility that the inside pressure may detach the lid 19 because of insufficiency of engagement of the locking protrusions 20 when the lid has been turned insufficiently to assume a normal position. Accordingly, as shown in FIGS. 8 and 9, a magnet 68 is mounted on the circumferential upper face of the lid 19, and a reed switch 69 enclosed in a casing 70 is provided on the inside of the door 3 so as to be responsive to the magnet 68, thereby detecting as to whether the lid 19 is closed at the normal position when the cylinder 12 is raised with the lid 19 being attached thereto. In this arrangement, when the lid 19 has been turned insufficiently to assume the normal position, the reed switch 69 is responsive to the reed switch even when the magnet 68 is slightly displaced from the reed switch, whereupon an erroneous detection may occur depending upon the sensitivity of the reed switch. In the embodiment, however, a limiting member 71 projecting toward the door 3 side is provided on a side edge of the magnet 68 relative to the direction in which the lid is turned. Accordingly, when the cylinder 12 is raised while the lid 19 has been turned insufficiently to assume the normal position, the limiting member 71 strikes against the casing 70 of the reed switch 69, thereby limiting the standing operation of the cylinder 12, as shown in FIG. 8.

On the other hand, when the lid 19 assumes the normal position, the limiting member 71 advances outward along a side of the casing 70 of the reed switch 69. As a result, the cylinder 12 can be raised to assume the standing position, and the magnet 68 is opposed to the reed switch 69. Thus, in the foregoing embodiment, whether the cylinder 12 can be raised can be determined by determining whether the lid 19 has normally been attached to the cylinder.

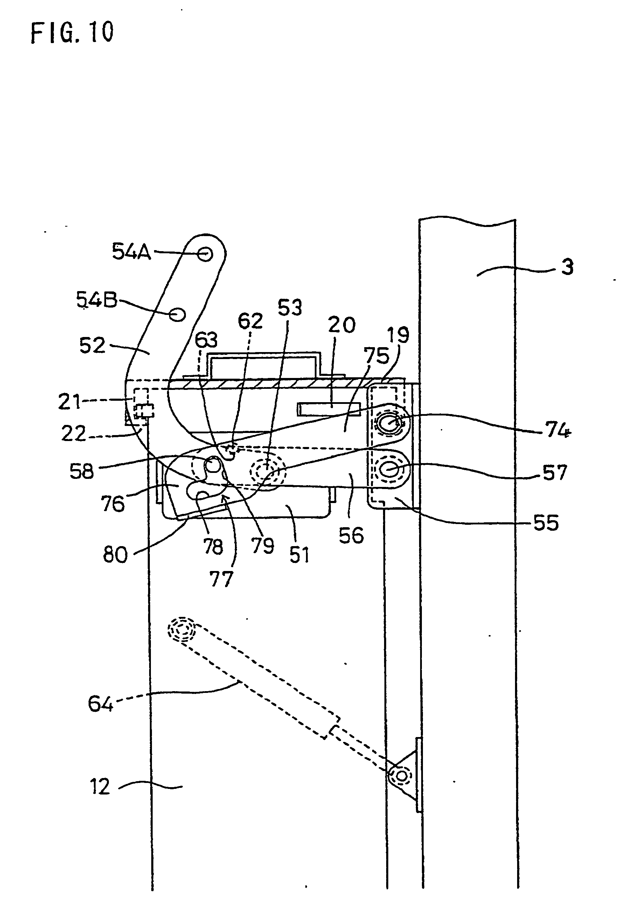

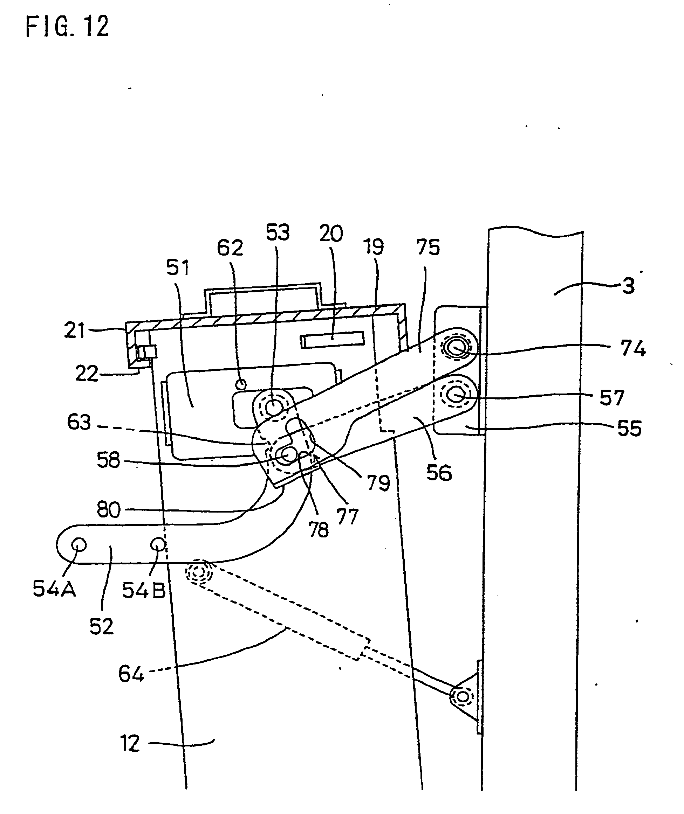

FIGS. 10 to 12 illustrate a second embodiment of the present invention. Only the difference between the first and second embodiments will be described. The identical or similar parts in the second embodiment are labeled by the same reference symbols and the description of these parts are eliminated. In the second embodiment, a stopper arm 75 is provided on one of the brackets 55 supporting the support arm 56 provided on the inside of the door 3. More specifically, the stopper arm 75 is rotatably mounted at a proximal end thereof on the support shaft 74. The stopper arm 75 includes in a lower portion thereof at the distal end side an increased-width portion 76. The increased-width portion 76 has a generally L-shaped groove 77 into which the connecting shaft 58 connecting the operating arm 52 and support arm 56 together can be fitted. The L-shaped groove 77 includes a horizontal groove serving as an escape groove 78 and a vertical groove extending perpendicularly from a rear end of the escape groove and serving as an engagement groove 79. When the cylinder 12 assumes the inclined position as shown in FIG. 12, the stopper arm 75 is downwardly inclined so that the connecting shaft 58 is fitted in the distal end side of the escape groove 78. When the cylinder 12 is moved to assume the standing position as shown in FIG. 10, the stopper arm 75 is slightly raised so that the connecting shaft 58 reaches the rear end of the escape groove 78. The stopper arm 75 has an operating member 80 formed on the underside of the distal end thereof so as to project outward.

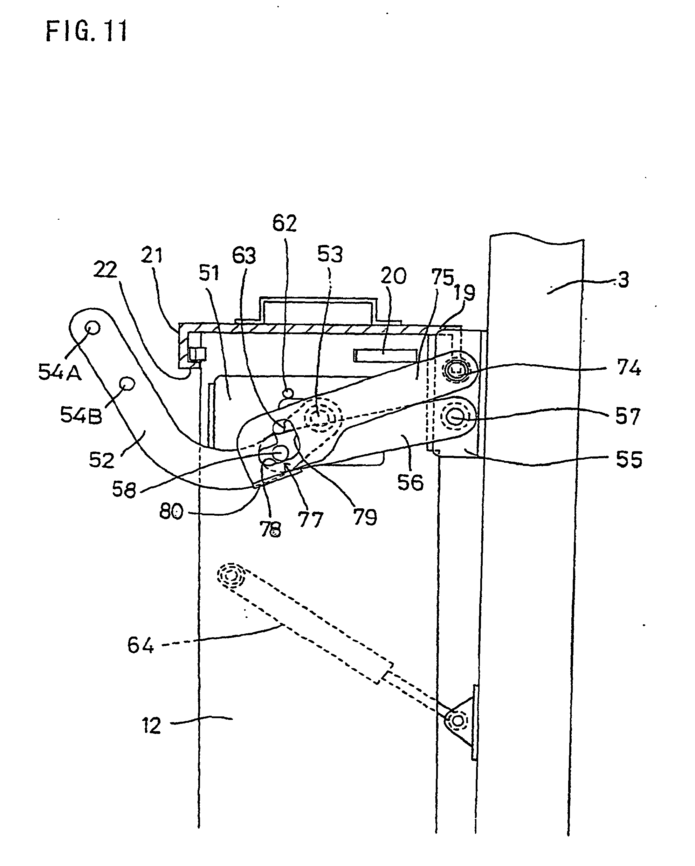

The operation of the ice cream dispenser of the second embodiment will now be described. The cylinder 12 is gradually raised as shown in FIG. 11 when the operating arm 52 is turned clockwise with the cylinder assuming the inclined position as shown in FIG. 12. The stopper arm 75 is also gradually raised so that the connecting shaft 58 slides rearward in the escape groove 78. When the cylinder 12 is raised to assume the standing position as shown in FIG. 10, the stopper arm 75 is also further raised so that the connecting shaft 58 reaches the rear end of the escape groove 78. As a result, the connecting shaft 58 is fitted into the engagement groove 79 while the stopper arm 75 is turned downward by the self-weight. Consequently, the operating arm 52 is locked so as to be disallowed to be turned counterclockwise so that the cylinder 12 is inclined, as shown in FIG. 10. Accordingly, the cylinder 12 is subjected to a reactive force tending to incline it during the dispensing of the ice cream A, for example. However, since the operating arm 52 is locked, the cylinder 12 is prevented from being inclined by the aforesaid reactive force. Consequently, the outlet C of the pack B can be prevented from being pulled to be loosened or to be disconnected from the connecting pipe 34.

When the cylinder 12 is to be inclined, the operation member 80 is caught by fingers in the condition as shown in FIG. 10 so that the distal end of the stopper arm 75 is raised. When the connecting shaft 58 reaches the lower end of the engagement groove 79 or the inner end of the escape groove 78, the operating arm 52 is released from the locked state. When the operating arm 52 is further turned counterclockwise, the cylinder 12 is inclined while the connecting shaft 58 slides toward the distal end side in the escape groove 78.

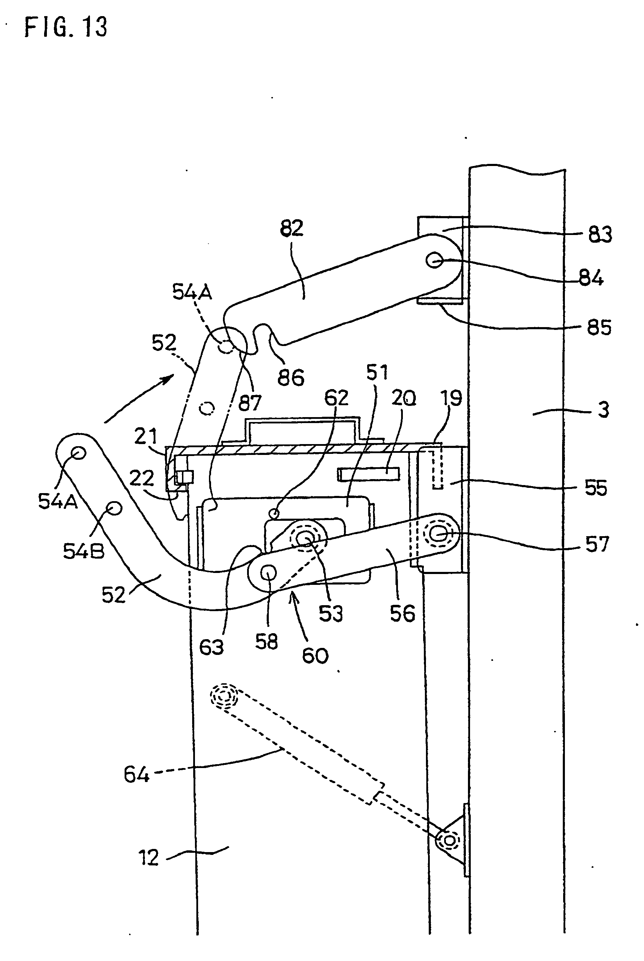

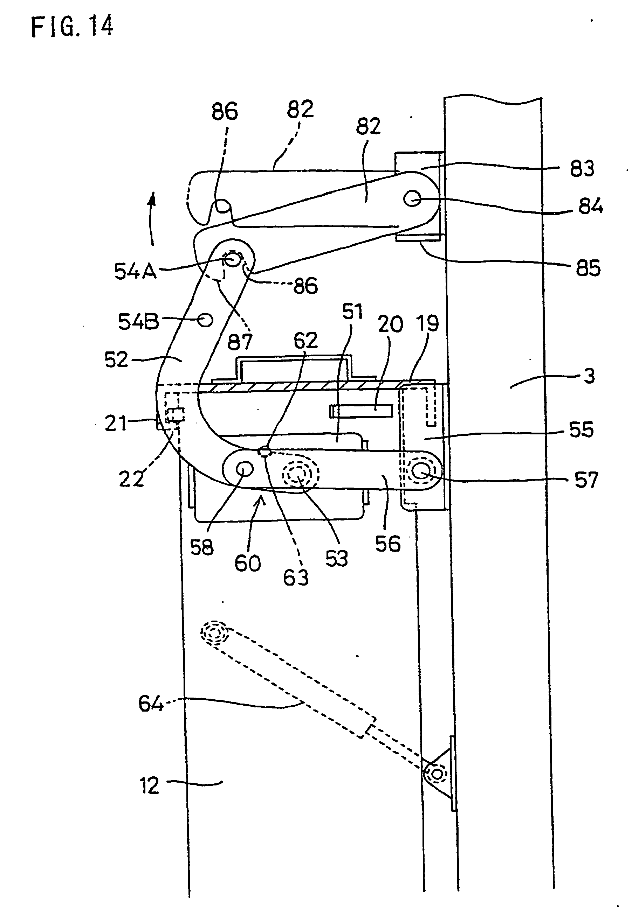

FIGS. 13 and 14 illustrate a third embodiment of the invention. The third embodiment relates to a modification of the stopper arm. A bracket 83 is mounted on the inside of the heat-insulated door 3 so as to be located in the middle between the operating arms 52 over the cylinder 12. The stopper arm 82 is pivotally mounted at its proximal end side on a support shaft 84 further mounted on the bracket 83. The bracket 83 includes a bottom plate 85 limiting a downward turn of the stopper arm 82. The stopper arm 82 is usually inclined downward so that its distal end reaches a movement area of the connecting bar 54A connected to both operating arms 52. The stopper arm 82 has a vertical engagement groove 86 formed in the underside of the distal end thereof and an arcuate guide face 87 formed on a lower portion of the distal end thereof.

When the operating arm 52 is raised in order that the cylinder 12 may be caused to stand as shown in FIG. 13, the connecting bar 54A strikes against the guide face 87 of the stopper arm 82 immediately before the standing position, pivotally moving the stopper arm so that the guide face is raised, as shown by two dot chain line in FIG. 13. When the cylinder 12 reaches the standing position as shown in FIG. 14, the connecting bar 54A is fitted into the engagement groove 86 while the stopper arm 82 is turned downward by the self-weight. As a result, the operating arm 52 is locked so as to be disallowed to be turned counterclockwise so that the cylinder 12 is inclined.

When the cylinder 12 is to be inclined, the middle underside of the stopper arm 82 is caught by fingers so that the distal end of the stopper arm 82 is raised as shown by two dot chain line in FIG. 14. As a result, the connecting bar 54A is disengaged from the engagement groove 86 so that the operating arm 52 is released from the locked state. The operating arm 52 is then turned counterclockwise.

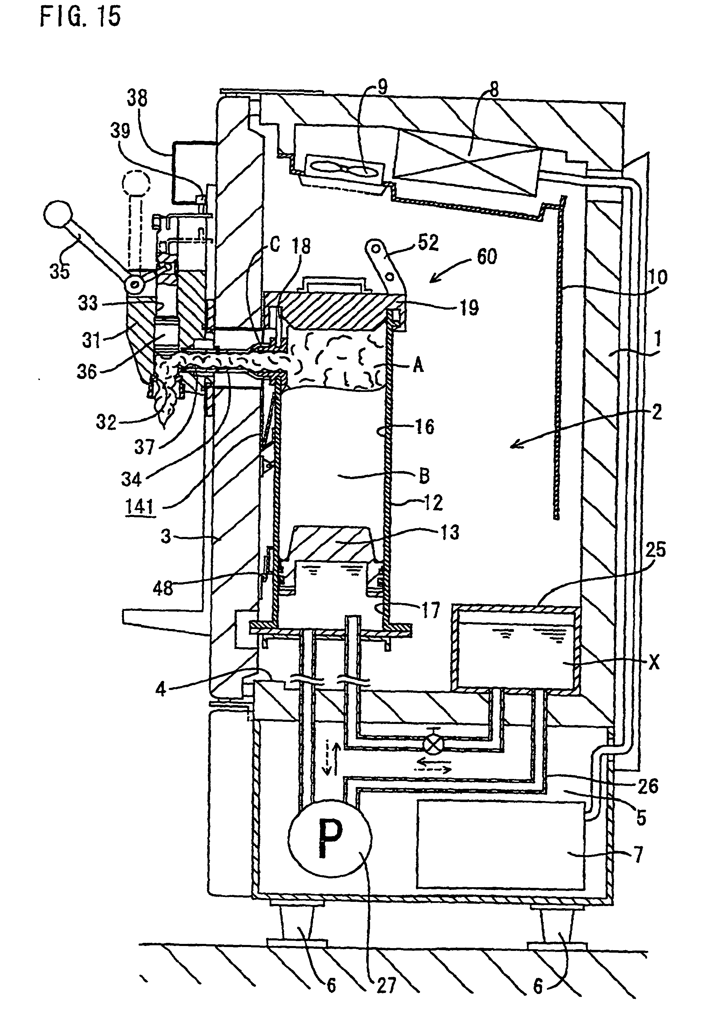

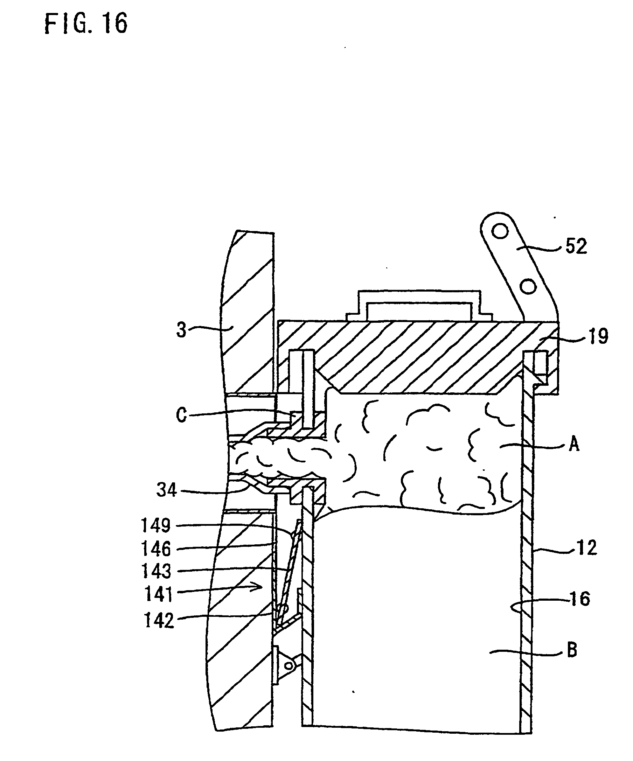

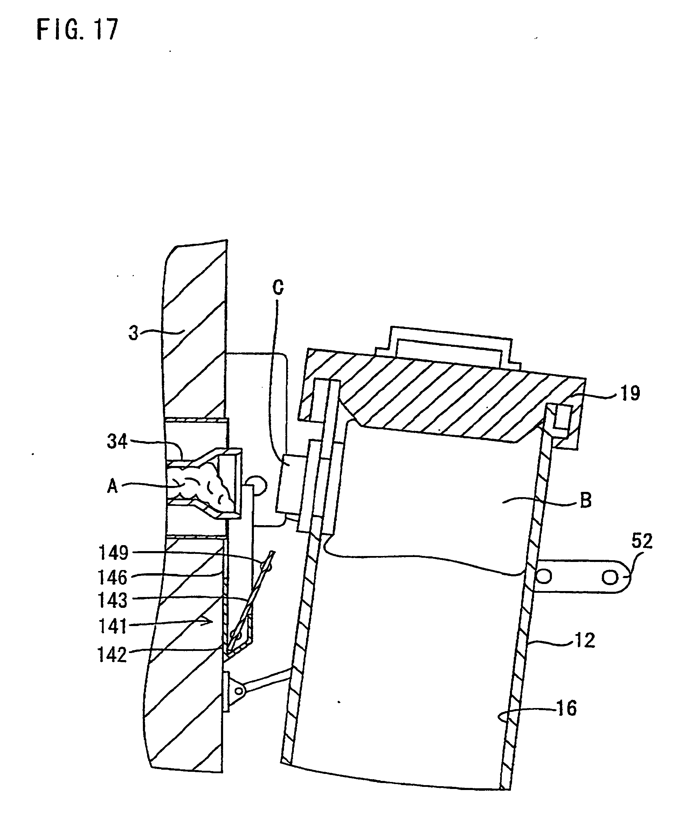

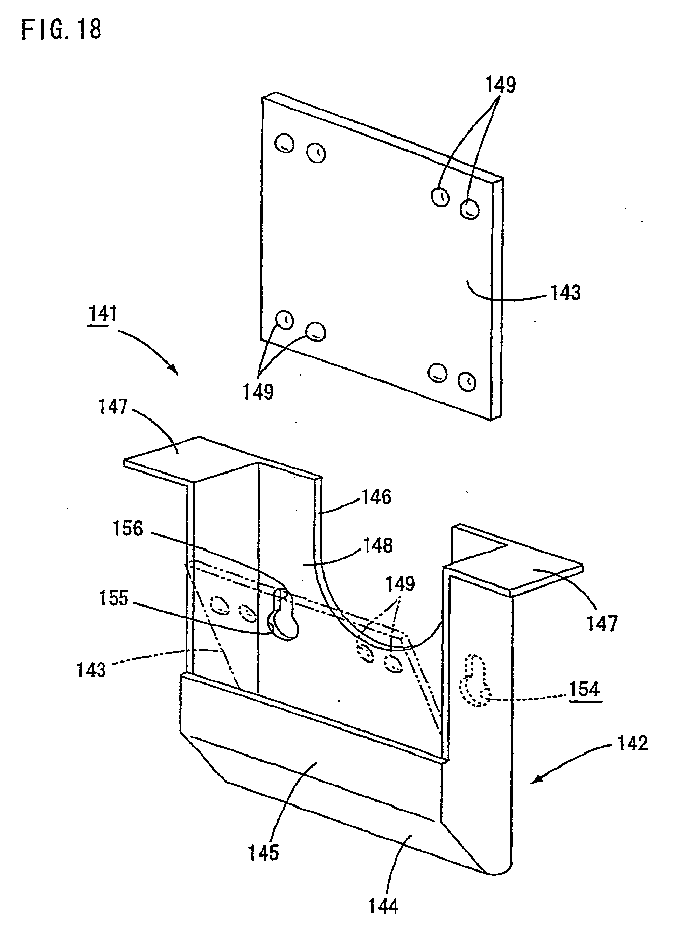

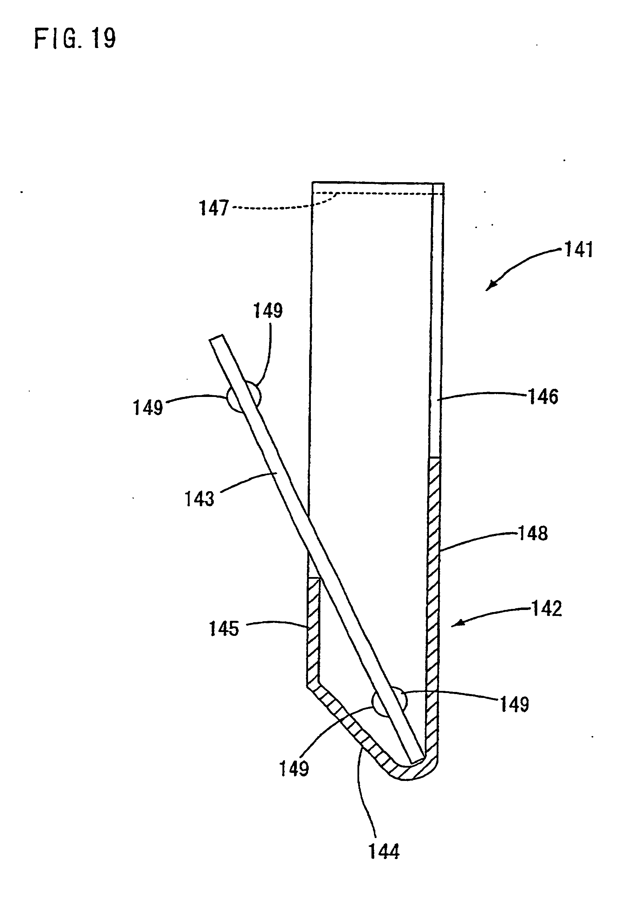

FIGS. 15 to 20 illustrate a fourth embodiment of the invention. In the fourth embodiment, a receiving member is provided in the ice cream dispenser of the first embodiment. The receiving member 141 is detachably attached to the inside of the heat-insulated door 3 so as to be located below the connecting pipe 34 projecting from the door inside. The receiving member 141 includes a container 142 and a receiving plate 143 as shown in FIGS. 16 and 17. The container 142 is formed into the shape of a flat box and includes a downwardly inclined bottom plate 144 and a low front plate 145 extending from the bottom plate. The receiving member 141 has a front opening over an upper edge of the front plate 145. The receiving member 141 further includes a rear plate 148 having a generally U-shaped escape hole 146 extending downward from an upper edge of the rear plate. The receiving member 141 further includes two side plates each of which has a knob plate 147 extending outward from an upper edge thereof. The receiving plate 143 is inserted into the container 142. The receiving plate 143 has a width substantially equal to that of the container 142 and a height smaller than the container and is formed into a rectangular shape. Four pairs of protrusions 149 are formed on corners of the receiving plate 143 respectively. Each pair includes protrusions protruding on opposite sides. The receiving plate 143 is prevented from adhering to the rear plate 148 of the container 142 even when wet. Further, even when the receiving plate 143 is inserted into the container 142 upside down or inside out, the protrusions 149 always abut the rear plate 148. Since the bottom plate 144 of the container 142 is inclined, the receiving plate 143 assumes an inclined position as shown in FIG. 19 when inserted in the container. In this case, the receiving plate 143 is held on the upper edge of the front plate 145 with the upper end thereof projecting out of the container 142.

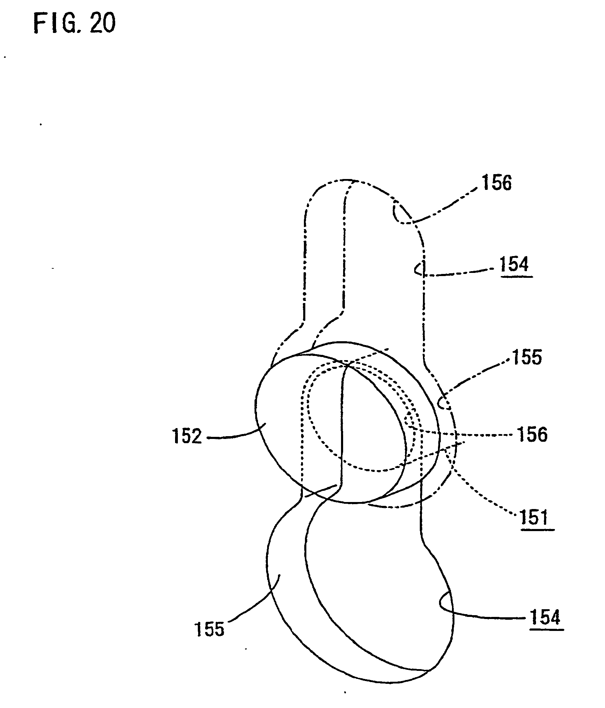

A mounting structure for the container 142 will now be described. A pair of right-hand and left-hand pins 151 project from the inside of the heat-insulated door 3 so as to be located slightly below the connecting pipe 34. Each pin 151 has a head 152 as shown in FIG. 20. The container 142 has a pair of right-hand and left-hand mounting holes 154 formed through the rear plate 148 thereof. Each mounting hole 154 includes a large diameter portion 155 through which the head 152 of the corresponding pin 151 is inserted and a small diameter portion 156 which is continuous to the large diameter portion 155 and with which the shaft portion of the corresponding pin 151 is fitted. When the knob plates 147 are grasped so that the large diameter portion 155 of the mounting hole 154 is pressed against the inside of the door 3 according to the heads 152 of the pins 151 as shown by two dot chain line in FIG. 20. Thereafter, when the container 142 is lowered as shown by solid line in FIG. 20, the small diameter portion 156 thereof is fitted with the shaft portion of the corresponding pin 151 to be locked by the head 152, whereby the container 142 is mounted. In detachment of the container 142, the knob plates 147 are grasped so that the container is raised, whereby the large diameter portion 155 assumes the position of the head 152. The container 142 is then pulled.

The operation of the ice cream dispenser of the fourth embodiment will be described. The receiving plate 141 is mounted on the inside of the door 3 in the above-described manner. During operation, as shown in FIGS. 15 and 16, the cylinder 12 assumes the standing position and accordingly, the receiving plate 143 is pushed by the circumferential face of the cylinder at the door 3 side so as to be inserted into the container 142 while being caused to stand.

The ice cream A is sequentially dispensed when the cock 35 is operated. The pack B is replaced by a new one when the ice cream A in the pack has been used up. The piston 13 is moved downward so that the pack-accommodating chamber 16 is spread. The door 3 is then opened and the cylinder 12 is taken out of the freezing compartment 2. The operating arm 52 of the link mechanism 60 is turned so that the cylinder 12 is inclined so as to assume the inclined position. With this, the outlet C of the pack B is pulled out of the inner end of the connecting pipe 34. The lid 19 is then detached from the cylinder 12 and the used pack B is taken out of the chamber 16 to be replaced by a new one.

Some amount of ice cream A remains in the connecting pipe 34 when the pack B is replaced by a new one, as shown in FIG. 17. When the door 3 is opened, the connecting pipe 34 is exposed to outside air such that the temperature thereof is increased. As a result, the ice cream A remaining in the connecting pipe 34 is sometimes melted to flow out of its inside end. However, nothing is restricted at the side of the receiving member 141 with the inclination of the cylinder 12. Accordingly, the cylinder 12 assumes the inclined position where the upper end of the receiving plate 143 projects ahead of the inner end of the connecting pipe 34, as shown in FIG. 17. Accordingly, even if the melted ice cream A falls in drops out of the inner end of the connecting pipe 34, it is received by the receiving plate 143 to flow downward along the receiving plate. The melted ice cream A is then reserved on the bottom of the container 142. Consequently, the ice cream A can be prevented from adhering to the hinge 48 etc.

When the new pack B of ice cream A is accommodated in the pack-accommodating chamber 16 and the lid 19 is then re-attached to the cylinder 12, the operating arm 52 is operated so that the cylinder 12 assumes the standing position. The outlet C of the pack B is then force fitted into the inner end of the connecting pipe 34 to be connected thereto, and the receiving plate 143 of the receiving member 141 is pushed to be folded at the container 142 side. When the door 3 is closed, the cylinder 12 is accommodated in the freezing compartment, so that the ice cream A can be re-dispensed in the above-described manner. Further, when the fallen ice cream A is reserved in the container 142, the container 142 is detached together with the receiving plate 143 to be cleaned by water.

According to the fourth embodiment, the melted ice cream A flown out of the inner end of the connecting pipe 34 to fall at the inside of the door 3 is received by the receiving member 141 to be reserved in the container 142. Consequently, the ice cream A can be prevented from adhering to the hinge 48 which is difficult to be cleaned or other parts, Further, the receiving plate 143 is folded into the container 142 side while the cylinder 12 is standing. When the cylinder 12 is inclined, there is a possibility that the ice cream A may fall in drops. At this time, the cylinder 12 is inclined so that the receiving member 141 projects ahead of the inner end of the connecting pipe 34. Consequently, the ice cream A can reliably be received even when the receiving member 141 is disposed in the narrow space defined between the door 3 and the cylinder 12.

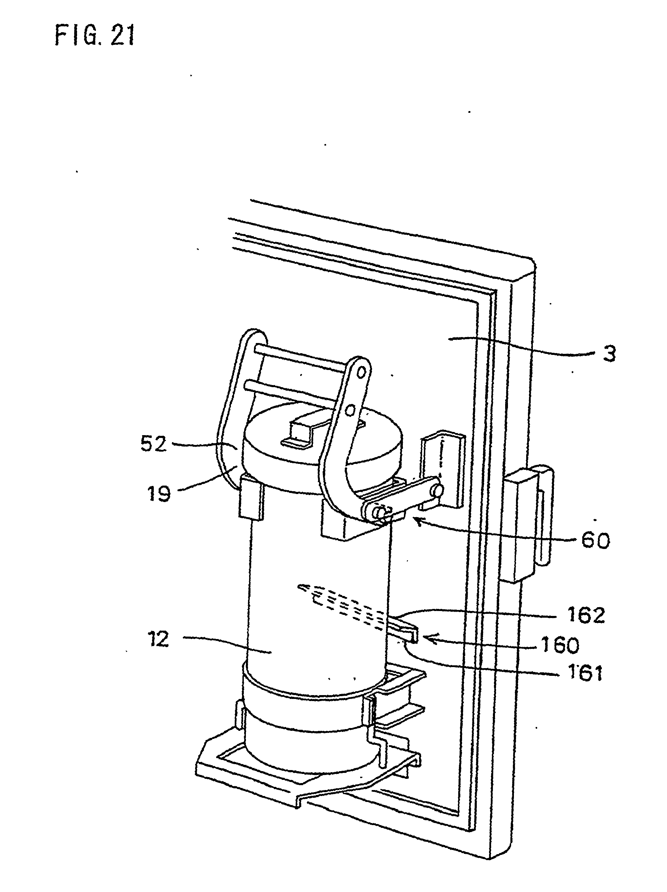

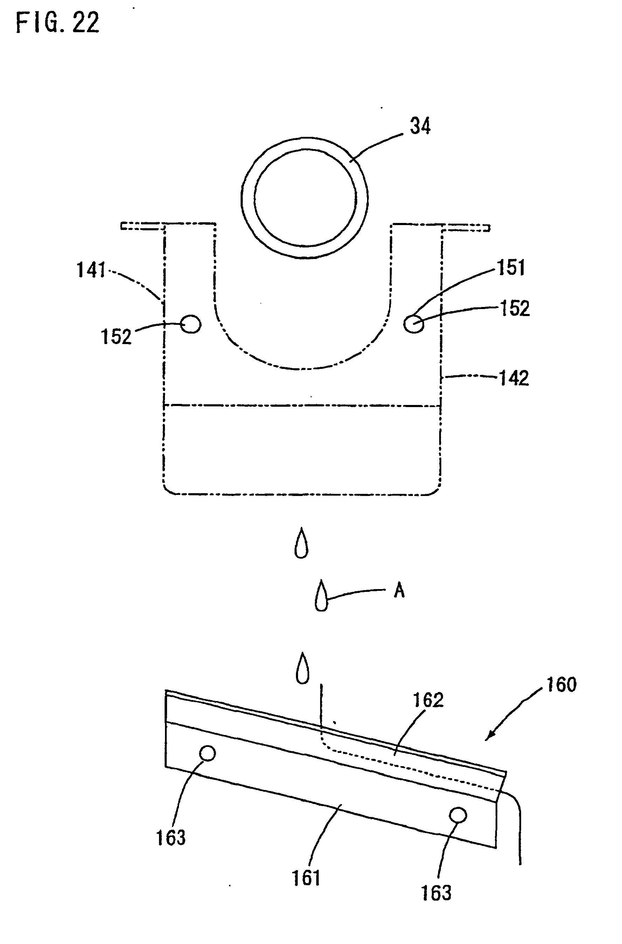

FIGS. 21 and 22 illustrate a fifth embodiment of the invention. In the above-described fourth embodiment, when the ice cream A reserved in the container 142 is taken out in order that the container may be cleaned, the melted ice cream A would fall in drops from the connecting pipe 34 during detachment of the receiving member 141. In this case, since no means is provided for receiving the fallen ice cream A, the hinge 48 etc. would be soiled. In view of this problem, the fifth embodiment provides an auxiliary receiving plate 160.

The auxiliary receiving plate 160 has a length sufficient to cover the hinge 48 mounted on the lower end of the cylinder 12. The auxiliary receiving plate 160 includes a vertical mounting portion 161 and a receiving portion 162 formed on an upper edge of the mounting portion so as to be upwardly inclined. The auxiliary receiving plate 160 is mounted on the inside of the door 3 by screws 163 so as to be located below the receiving member 141. The receiving portion 162 is directed to the freezing compartment 2, and one of opposed ends is lowered so that the receiving plate 160 is inclined. When the receiving member 141 has been detached, the ice cream A falling from the connecting pipe 34 is received by the receiving portion 162 of the auxiliary receiving plate 160 to further flow along the inclined receiving portion to the lower end side. The ice cream A is then caused to flow along the inside of the door 3 at one side of the hinge 48 to be discharged. Thus, when the ice cream A falls in drops while the receiving member 141 is detached, the ice cream A can be prevented from adhering at least to the hinge 48.

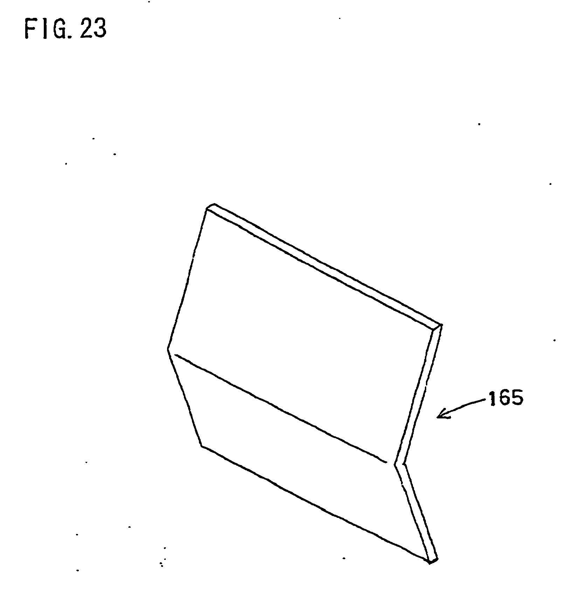

FIG. 23 illustrates a sixth embodiment of the invention. The receiving plate 165 inserted into the container 142 of the receiving member 140 may have a middle portion projecting to the surface side so as to be formed into an angled shape. In this case, since the center of gravity of the receiving plate 165 is displaced, toward the surface side, the receiving plate can assume an inclined position with its upper end projecting out of the container 142.

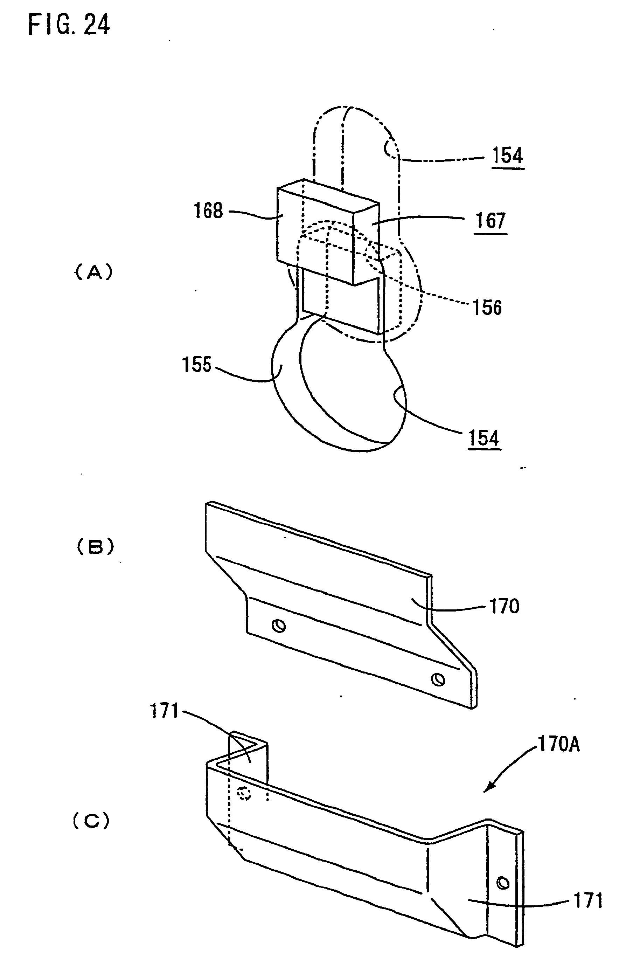

FIGS. 24A, 24B and 24C illustrate a seventh embodiment of the invention. The seventh embodiment relates to means for mounting the container 142 of the receiving member 141 on the inside of the door 3. FIG. 24A shows an engagement member 167 bent into the shape of a crank. The engagement member 167 is mounted on the inside of the door 3. The small diameter portion 156 of the mounting hole 154 is caught on a protrusion 168 of the upper end of the engagement member 167. FIG. 24B shows a mounting member 170 with which the bottom of the container 142 is fitted from above. FIG. 24C shows a mounting member 170A formed by providing side plates 171 on the aforesaid mounting member 170. The mounting member 170A prevents horizontal detachment as well as vertical detachment.

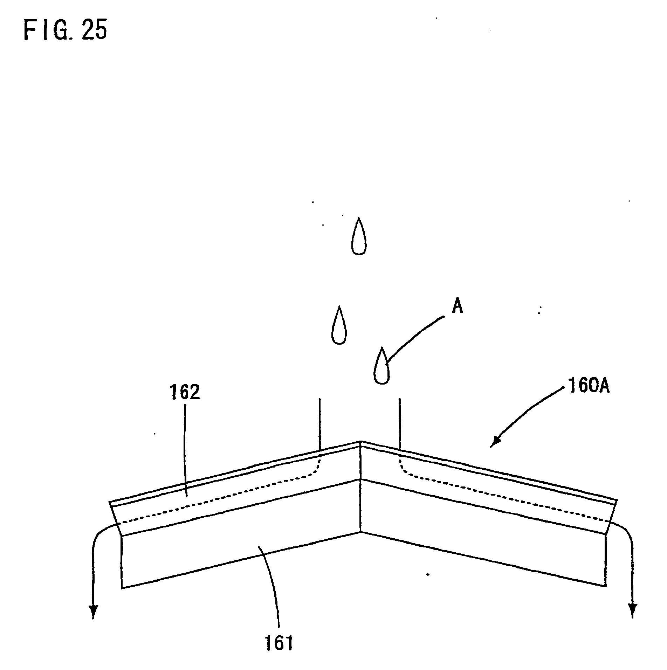

FIG. 25 illustrates an eighth embodiment of the invention. In the eighth embodiment, an auxiliary receiving plate 160A is provided instead of the auxiliary receiving plate 160 in the fifth embodiment. The auxiliary receiving plate 160A has an angled front. When the auxiliary receiving plate 160A is provided, the ice cream A fallen on the receiving portion 162 is caused to flow along both sides of the hinge 48 without falling onto the hinge.

Another fluid than the brine may be used as the operating fluid for the dispensing cylinder. Alternatively, the invention may be applied to a dispenser in which air is used as the operating fluid.

In the foregoing embodiments, the ice cream includes both of a soft ice cream and a hard ice cream. Further, the invention may be applied to dispensers for dispensing other frozen deserts such as yogurt or sherbet.

## Claims

1. A frozen dessert dispenser wherein a dispensing cylinder (12) in which a piston (13) is fitted so as to be slid is provided on an inside of a door (3) of a cold storage (1), wherein a pack (8) of a frozen dessert (A) is accommodated in an interior of the dispensing cylinder (12) over the piston (13), wherein a dispensing section (31) including a valve (36) is provided on an outside of the door (3), and wherein a connecting pipe (34) extending from the dispensing section (31) through the door (3) is connected to a discharge outlet (C) of the pack (B), **characterized by** an operating arm (52) pivotally mounted on an upper end of the dispensing cylinder (12) and a support arm (56) connected to both the operating arm (52) and the door (3) so that a link mechanism (60) is constituted, and in that the dispensing cylinder (12) is supported so as to be inclined so that an upper end side thereof is departed from the door (3) and that the operating arm (52) is caused to pivot so that the dispensing cylinder (12) is inclined between a standing position and an inclined position.

2. The frozen dessert dispenser according to claim 1, **characterized in that** the operating arm (52) includes an abutting portion (54B) abutting the dispensing cylinder (12) when the dispensing cylinder (12) is inclined to assume the inclined position, thereby preventing further inclination of the dispensing cylinder (12).

3. The frozen dessert dispenser according to claim 1 or 2, **characterized by** damping means (64) interposed between the door (3) and the dispensing cylinder (12).

4. The frozen dessert dispenser according to any one of claims 1 to 3, **characterized by** a stopper (75) provided on the inside of the door (3) so as to engage the operating arm (52) when the dispensing cylinder (12) assumes the standing position, thereby preventing return of the operating arm (52).

5. The frozen dessert dispenser according to any one of claims 1 to 4, **characterized by** limiting means (62) provided on the dispensing cylinder (12) so as to abut the operating arm (52) when the dispensing cylinder (12) assumes the standing position, thereby preventing further pivot of the operating arm (52).

6. The frozen dessert dispenser according to any one of claims 1 to 5, **characterized in that** the operating arm (52) is adapted to strike against an edge of an opening (4) closed and opened by the door (3).

7. The frozen dessert dispenser according to any one of claims 1 to 6, **characterized in that** the dispensing cylinder (12) is placed on a mounting member (41) to be supported thereon, the mounting member (41) being rockably mounted via a hinge (48) on the inside of the door (3), and that the mounting member (41) is provided with positioning means (47) for positioning the dispensing cylinder (12) at a normal mounting position.

8. The frozen dessert dispenser according to claim 7, **characterized in that** the mounting member (41) includes a fitting frame (45) into which a lower end of the dispensing cylinder (12) is fitted, the fitting frame (45) having a side edge formed with a recess (47) into which a part of an outer circumference of the dispensing cylinder (12) is fitted, the recess (47) constituting the positioning means (47).

9. The frozen dessert dispenser according to any one of claims 1 to 8, **characterized in that** the dispensing cylinder (12) has an upper open end to which a lid (19) is attached so as to be detachable while being rotated, whereupon a pack-accommodating chamber (16) for accommodating the pack (B) is defined between the piston (13) and the lid (19), that the lid (19) and the inside of the door (3) are provided with two detecting members (68, 69) responsive in an opposite relation respectively when the dispensing cylinder (12) assumes the standing position and the lid (19) is normally closed, and that the detecting member (68) at the lid (19) side is provided with limiting means (71) striking against the inside of the door (3) to thereby prevent the dispensing cylinder (12) from assuming the standing position when the lid (19) is not normally closed.

10. A frozen dessert dispenser according to any one of claims 1 to 9, **characterized by** a receiving member (141) detachably mounted on the inside of the door (3) to be located below the connecting pipe (34) for receiving the ice cream (A) falling from the connecting pipe (34).

11. The frozen dessert dispenser according to claim 10, **characterized in that** the dispensing cylinder (12) is mounted at a lower end side thereof on a hinge (48) further mounted on the inside of the door (3) so that an upper end side of the dispensing cylinder (12) is inclined.

12. The frozen dessert dispenser according to claim 11, **characterized in that** the receiving member (141) includes a container (142) having an upper open end and detachably mounted on the inside of the door (3) and a receiving plate (143) inserted into the container (142), the receiving plate (143) being inserted into the container (142) while being usually inclined so that an upper end side thereof is spaced away from the inside of the door (3), that the receiving plate (142) is pushed by the dispensing cylinder (12) to be raised when the dispensing cylinder (12) assumes a standing position, and that the receiving plate (143) is inclined with inclination of the dispensing cylinder (12).

13. The frozen dessert dispenser according to claim 11 or 12, **characterized by** an auxiliary receiving plate (160) provided on the inside of the door (3) to be located below the receiving member (141) for receiving the frozen dessert (A) falling along the inside of the door (3) and guiding the received frozen dessert (A) toward opposite sides of the hinge (48).

## Patentansprüche

1. Abgabeeinheit für gefrorene Süßspeise, wobei ein Abgabezylinder (12), in welchem ein Kolben (13) so eingepaßt ist, um zu gleiten, an einer Innenseite eines Tors (3) eines Kaltspeichers (1) vorgesehen ist, wobei eine Packung (8) aus einem gefrorenen Dessert bzw. einer gefrorenen Süßspeise (A) in einem Inneren des Abgabezylinders (12) über dem Kolben (13) aufgenommen ist, wobei ein Abgabeabschnitt (31), beinhaltend ein Ventil (36), an einer Außenseite des Tors (3) zur Verfügung gestellt ist, und wobei ein Verbindungsrohr (34), das sich von dem Abgabeabschnitt (31) durch das Tor (3) erstreckt, mit einem Austragsauslaß (C) der Packung (B) verbunden ist, **gekennzeichnet durch** einen Betätigungsarm (52), der schwenkbar an einem oberen Ende des Abgabezylinders (12) montiert ist, und einen Unterstützungs- bzw. Supportarm (56), der sowohl mit dem Betätigungsarm (52) als auch dem Tor (3) so verbunden ist, daß ein Kopplungs- bzw. Verbindungsmechanismus (60) ausgebildet ist, und **dadurch**, daß der Abgabezylinder (12) so abgestützt ist, um geneigt zu sein, daß eine obere Endseite davon von dem Tor (3) getrennt ist und daß der Betätigungsarm (52) veranlaßt ist, so zu schwenken, daß der Abgabezylinder (12) zwischen einer stehenden Position und einer geneigten Position geneigt ist.

2. Abgabeeinheit für gefrorene Süßspeise nach Anspruch 1, **dadurch gekennzeichnet, daß** der Betätigungsarm (52) einen anliegenden bzw. Anschlagabschnitt (54B) beinhaltet, der den Abgabezylinder (12) abstützt, wenn der Abgabezylinder (12) geneigt ist, um die geneigte Position einzunehmen, wodurch eine weitere Neigung des Abgabezylinders (12) verhindert ist.

3. Abgabeeinheit für gefrorene Süßspeise nach Anspruch 1 oder 2, **gekennzeichnet durch** Dämpfungsmittel (64), die zwischen dem Tor (3) und dem Abgabezylinder (12) zwischengelagert sind.

4. Abgabeeinheit für gefrorene Süßspeise nach einem der Ansprüche 1 bis 3, **gekennzeichnet durch** einen Anschlag (75), der an der Innenseite des Tors (3) so vorgesehen ist, um den Betätigungsarm (52) zu ergreifen, wenn der Abgabezylinder (12) die stehende Position einnimmt, wodurch eine Rückkehr des Betätigungsarms (52) verhindert ist.

5. Abgabeeinheit für gefrorene Süßspeise nach einem der Ansprüche 1 bis 4, **gekennzeichnet durch** Beschränkungs- bzw. Begrenzungsmittel (62), die an dem Abgabezylinder (12) so vorgesehen sind, um den Betätigungsarm (52) abzustützen, wenn der Abgabezylinder (12) die stehende Position einnimmt, wodurch eine weitere Verschwenkung des Betätigungsarms (52) verhindert ist.

6. Abgabeeinheit für gefrorene Süßspeise nach einem der Ansprüche 1 bis 5, **dadurch gekennzeichnet, daß** der Betätigungsarm (52) adaptiert ist, um gegen eine Kante bzw. einen Rand einer Öffnung (4) zu schlagen, die durch das Tor (3) geschlossen und geöffnet wird.

7. Abgabeeinheit für gefrorene Süßspeise nach einem der Ansprüche 1 bis 6, **dadurch gekennzeichnet, daß** der Abgabezylinder (12) an einem Montageglied (41) angeordnet ist, um darauf abgestützt zu sein, wobei das Montageglied (41) schwenkbar bzw. hin- und herbewegbar über ein Scharnier bzw. Gelenk (48) an der Innenseite des Tors (3) montiert ist, und daß das Montageglied (41) mit Positionierungsmitteln (47) versehen ist, um den Abgabezylinder (12) an einer normalen Montageposition zu positionieren.

8. Abgabeeinheit für gefrorene Süßspeise nach Anspruch 7, **dadurch gekennzeichnet, daß** das Montageglied (41) einen Paßrahmen (45) beinhaltet, in welchen ein unteres Ende des Abgabezylinders (12) eingepaßt ist, wobei der Paßrahmen (45) eine Seitenkante aufweist, die mit einer Vertiefung bzw. Ausnehmung (47) ausgebildet ist, in welche ein Teil eines Außenumfangs des Abgabezylinders (12) eingepaßt ist, wobei die Ausnehmung (47) die Positioniermittel (47) ausbildet.

9. Abgabeeinheit für gefrorene Süßspeise nach einem der Ansprüche 1 bis 8, **dadurch gekennzeichnet, daß** der Abgabezylinder (12) ein oberes offenes Ende aufweist, an welches ein Deckel (19) festgelegt ist, um lösbar zu sein, während er gedreht wird, worauf eine Packungsaufnahmekammer (16) zum Aufnehmen der Packung (B) zwischen dem Kolben (13) und dem Deckel (19) definiert ist, daß der Deckel (19) und das Innere des Tors (3) mit zwei detektierenden bzw. Detektionsgliedem (68, 69) versehen sind, die in einer gegenseitigen Beziehung jeweils ansprechen, wenn der Abgabezylinder (12) die stehende Position einnimmt und der Deckel (19) normal geschlossen ist, und daß das Detektionsglied (68) an der Seite des Deckels (19) mit Beschränkungsmitteln (71) versehen ist, welche gegen die Innenseite des Tors (3) schlagen, um **dadurch** den Abgabezylinder (12) zu hindern, die stehende Position einzunehmen, wenn der Deckel (19) nicht normal geschlossen ist.

10. Abgabeeinheit für gefrorene Süßspeise nach einem der Ansprüche 1 bis 9, **gekennzeichnet durch** ein aufnehmendes bzw. Aufnahmeglied (141), das lösbar an der Innenseite des Tors (3) festgelegt ist, um unter dem Verbindungsrohr (34) angeordnet zu sein, um die Eiscreme (A) aufzunehmen, die aus dem Verbindungsrohr (34) fällt.

11. Abgabeeinheit für gefrorene Süßspeise nach Anspruch 10, **dadurch gekennzeichnet, daß** der Abgabezylinder (12) an einer unteren Endseite davon an einem Scharnier (48) montiert ist, das weiters an der Innenseite des Tors (3) so festgelegt bzw. montiert ist, daß eine obere Endseite des Abgabezylinders (12) geneigt ist.

12. Abgabeeinheit für gefrorene Süßspeise nach Anspruch 11, **dadurch gekennzeichnet, daß** das Aufnahmeglied (141) einen Behälter (142), der ein oberes offenes Ende aufweist und lösbar an der Innenseite des Tors (3) montiert ist, und eine Aufnahmeplatte (143) enthält, die in den Behälter (142) eingesetzt ist, wobei die Aufnahmeplatte (143) in den Behälter (142) eingesetzt ist, während er üblicherweise so geneigt ist, daß eine obere Endseite davon von der Innenseite des Tors (3) beabstandet ist, daß die Aufnahmeplatte (142) durch den Abgabezylinder (12) gedrückt ist bzw. wird, um angehoben zu werden, wenn der Abgabezylinder (12) eine stehende Position einnimmt, und daß die Aufnahmeplatte (143) mit der Neigung des Abgabezylinders (12) geneigt ist.

13. Abgabeeinheit für gefrorene Süßspeise nach Anspruch 11 oder 12, **gekennzeichnet durch** eine Hilfsaufnahmeplatte (160), die an der Innenseite des Tors (3) vorgesehen ist, um unter dem Aufnahmeglied (141) angeordnet zu sein, um die gefrorene Süßspeise aufzunehmen (A), die entlang der Innenseite des Tors (3) fällt, und die aufgenommene bzw. empfangene gefrorene Süßspeise (A) zu gegenüberliegenden Seiten des Scharniers (48) zu führen.

## Revendications

1. Distributeur de desserts glacés, dans lequel un cylindre de distribution (12) dans lequel un piston (13) est disposé de manière à coulisser à l'intérieur d'une porte (3) d'une chambre froide (1), dans laquelle une boîte (8) de dessert glacé (A) est placée au-dessus du piston (13) à l'intérieur du cylindre de distribution (12), une partie de distribution (31) qui comprend une soupape (36) étant prévue à l'extérieur de la porte (3) et un conduit de liaison (34) qui s'étend depuis la partie de distribution (31) jusque dans la porte (3) étant relié à l'orifice (C) qui décharge la boîte (B), **caractérisé par** un bras d'actionnement (52) monté à pivotement sur l'extrémité supérieure du cylindre de distribution (12) et par un bras de support (56) relié au bras d'actionnement (52) et à la porte (3) de manière à former un mécanisme de liaison (60), en ce que le cylindre de distribution (12) est soutenu de manière à être incliné de telle sorte que son côté d'extrémité supérieure soit écarté de la porte (3) et en ce que le bras d'actionnement (52) est amené à pivoter de telle sorte que le cylindre de distribution (12) soit incliné entre une position debout et une position inclinée.

2. Distributeur de desserts glacés selon la revendication 1, **caractérisé en ce que** le bras d'actionnement (52) comprend une partie de butée (54B) qui vient buter contre le cylindre de distribution (12) lorsque le cylindre de distribution (12) est incliné de manière à être placé dans la position inclinée, ce qui permet d'empêcher le cylindre de distribution (12) de s'incliner davantage.

3. Distributeur de desserts glacés selon les revendications 1 ou 2, **caractérisé par** un moyen d'amortissement (64) interposé entre la porte (3) et le cylindre de distribution (12).

4. Distributeur de desserts glacés selon l'une quelconque des revendications 1 à 3, **caractérisé par** un arrêt (75) prévu à l'intérieur de la porte (3) de manière à engager le bras d'actionnement (52) lorsque le cylindre de distribution (12) est dans la position debout, ce qui permet d'empêcher le retour du bras d'actionnement (52).

5. Distributeur de desserts glacés selon l'une quelconque des revendications 1 à 4, **caractérisé par** un moyen de limitation (62) prévu sur le cylindre de distribution (12) de manière à venir buter contre le bras d'actionnement (52) lorsque le cylindre de distribution (12) se trouve dans la position droite, ce qui permet d'empêcher le bras d'actionnement (52) de pivoter davantage.

6. Distributeur de desserts glacés selon l'une quelconque des revendications 1 à 5, **caractérisé en ce que** le bras d'actionnement (52) convient pour buter contre le bord d'une ouverture (4) qui est ouverte et fermée par la porte (3).

7. Distributeur de desserts glacés selon l'une quelconque des revendications 1 à 6, **caractérisé en ce que** le cylindre de distribution (12) est placé sur un élément de support (41) de manière à y être soutenu, l'élément de support (41) étant monté à pivotement par l'intermédiaire d'une charnière (48) située à l'intérieur de la porte (3), et **en ce que** l'élément de support (41) est doté d'un moyen de positionnement (47) qui positionne le cylindre de distribution (12) dans une position normale de support.

8. Distributeur de desserts glacés selon la revendication 7, **caractérisé en ce que** l'élément de support (41) comprend un cadre d'insertion (45) dans lequel est reçue l'extrémité inférieure du cylindre de distribution (12), le cadre d'insertion (45) présentant un bord latéral doté d'un creux (47) dans lequel est reçue une partie de la périphérie extérieure du cylindre de distribution (12), le creux (47) constituant le moyen de positionnement (47).

9. Distributeur de desserts glacés selon l'une quelconque des revendications 1 à 8, **caractérisé en ce que** le cylindre de distribution (12) a une extrémité supérieure ouverte sur laquelle un couvercle (19) est fixé de manière se détacher lorsqu'il est tourné, une chambre (16) de réception de boîte qui reçoit la boîte (B) étant définie entre le piston (13) et le couvercle (19), **en ce que** le couvercle (19) et l'intérieur de la porte (3) sont dotés de deux éléments de détection (68, 69) qui réagissent en opposition respectivement lorsque le cylindre de distribution (12) est dans sa position debout et que le couvercle (19) est normalement fermé, et **en ce que** l'élément de détection (68) situé à côté du couvercle (19) est doté d'un moyen de limitation (71) qui vient buter contre l'intérieur de la porte (3), ce qui permet d'empêcher le cylindre de distribution (12) d'être placé dans la position debout lorsque le couvercle (19) n'est pas normalement fermé.

10. Distributeur de desserts glacés selon l'une quelconque des revendications 1 à 9, **caractérisé par** un moyen de réception (141) monté de manière détachable à l'intérieur de la porte (3) de manière à être situé en dessous du conduit de liaison (34) pour recevoir la crème glacée (A) qui tombe du conduit de liaison (34).

11. Distributeur de desserts glacés selon la revendication 10, **caractérisé en ce que** par son côté d'extrémité inférieure, le cylindre de distribution (12) est monté sur une charnière supplémentaire (48) montée à l'intérieur de la porte (3) de telle sorte que le côté d'extrémité supérieure du cylindre de distribution (12) soit incliné.

12. Distributeur de desserts glacés selon la revendication 11, **caractérisé en ce que** l'élément de réception (141) comprend un récipient (142) dont une extrémité supérieure est ouverte et qui est monté de manière libérable à l'intérieur de la porte (3) et une plaque de réception (143) insérée dans le récipient (142), la plaque de réception (143) étant insérée dans le récipient (142) lorsqu'elle est inclinée normalement de telle sorte que son côté d'extrémité supérieure soit situé à distance de l'intérieur de la porte (3), **en ce que** la plaque de réception (142) est repoussée par le cylindre de distribution (12) de manière à être relevée lorsque le cylindre de distribution (12) se trouve dans la position debout et **en ce que** la plaque de réception (143) s'incline lorsque le cylindre de distribution (12) est incliné.

13. Distributeur de desserts glacés selon les revendications 11 ou 12, **caractérisé par** une plaque auxiliaire de réception (160) prévue à l'intérieur de la porte (3) de manière à être située en dessous de l'élément de réception (141) pour recevoir le dessert glacé (A) qui tombe le long de l'intérieur de la porte (3) et à guider le dessert glacé (A) reçu vers les côtés mutuellement opposés de la charnière (48).
